# EUROPEAN PATENT SPECIFICATION

(11) **EP 4 321 074 B1**
(45) Date of publication and mention of the grant of the patent: **02.04.2025**
(21) Application number: 23190709.8
(22) Date of filing: 09.08.2023
(51) Int. Cl.: A47L 9/24, A47L 11/40, A47L 11/20

(54) **EXTRACTION CLEANER SYSTEMS, METHODS, AND DEVICES WITH SELF-CLEANING HOSE FEATURES**
EXTRAKTIONSREINIGUNGSSYSTEME, VERFAHREN UND VORRICHTUNGEN MIT SELBSTREINIGENDEN SCHLAUCHMERKMALEN
SYSTÈMES, PROCÉDÉS ET DISPOSITIFS DE NETTOYAGE PAR EXTRACTION AVEC ÉLÉMENTS DE TUYAU AUTONETTOYANTS

(30) Priority: 11.08.2022 US 202263397187 P
(43) Date of publication of application: 14.02.2024
(73) Proprietor: BISSELL Inc., Grand Rapids, MI 49544 (US)
(72) Inventor: Zeitler, Isaac, Grand Rapids, 49544 (US)
(74) Representative: Sandersons

(56) References cited:
- EP-A1- 3 466 313
- US-A- 4 083 077
- US-A- 4 159 554
- US-A1- 2020 093 345

## Description

### FIELD OF THE INVENTION

The present invention relates generally to vacuum-based systems that generate suction to remove assorted debris from surfaces. In particular, aspects of this invention relate to wand assemblies for extraction cleaners.

### BACKGROUND

A traditional vacuum cleaner is an electro-pneumatic device that generates a gaseous pressure vacuum for cleaning hard surfaces, such as tile and wood flooring, and soft surfaces, such as carpet and upholstery. While conventionally built as a "dry" type cleaning apparatus limited to dirt, dust, and solid debris, some surface-cleaning vacuums are adapted as "wet" type fluid recovery systems that also extract stains and other liquids from a surface. Many modern wet extraction cleaners - also known as a "deep cleaner" or "DC" - also come equipped with a liquid delivery system and, optionally, a liquid recovery and stowage system. The delivery system expels a cleaning solution onto the surface being cleaned, while the liquid recovery system extracts spent cleaning liquid and debris from the surface and may stow the extracted liquid/debris in a recovery tank. EP3466313 provides an example of such a cleaner.

As part of a deep cleaner's liquid delivery system, a fluid-tight supply tank or a disposable solution container is included for storing and dispensing a cleaning solution having an application-suitable composition (e.g., water, surfactants, stabilizers, fragrances, foaming agents, and/or detergents). In use, a cleaning solution can be dispensed from the supply tank/container through a fluid supply conduit that extends to fluid dispensers associated with a foot of the cleaner (upright deep cleaner), through a hose to fluid dispensers associated with a wand or tool (portable and upright deep cleaners), or to fluid dispensers carried by a body of the cleaner (handheld). The solution may be expelled onto each surface being cleaned through one or more spray orifices associated with an accessory tool, a cleaner foot, a nozzle head, or an external spray nozzle attached to a wand extending between the accessory tool and the hose. A pneumatic pressure source located aboard the deep cleaner generates sufficient suction forces to extract spent solution, staining liquid, and entrained debris from the surface.

### SUMMARY OF THE INVENTION

Presented herein are self-cleaning hose ("cleanout") features for vacuum-based cleaning systems, methods for making and methods for using disclosed vacuum systems and cleanout features, and wet-type extraction cleaners equipped with hose cleanout devices. In a non-limiting example, there are presented self-cleaning features for accessory hoses that fluidly couple accessory tools with extraction cleaners. Over time, wet-type extraction cleaning processes may engender a gradual buildup of extracted debris within sections of the hose. In some designs, debris build-up may also occur along portions of interior surfaces of a wand component that couples an accessory tool with an accessory hose. Accumulated debris - depending on its volume and composition - may emit undesirable odors. To mitigate any such buildup, an extraction cleaner according to aspects of the present disclosure employs a hose cleanout system with a manually operated actuator lever that, when activated, unseats a valve plug and concomitantly slides a spring-biased spool valve body to redirect cleaning solution from the liquid delivery system directly into the fluid recovery path.

According to the present invention there is provided, a wand assembly for an extraction cleaner as claimed in claim 1, which has a fluid delivery system and a fluid recovery system. The wand body includes a fluid delivery pathway configured to receive a cleaning liquid via a delivery line and dispense the cleaning liquid through a distributor outlet. The wand body also includes a fluid recovery pathway configured to evacuate debris received via a working airflow pathway, and a fluid port fluidly connecting the fluid delivery and recovery pathways. A valve assembly is actuable between an inactive state, in which the valve assembly seals the fluid port and blocks a supply of fluid from the delivery line, to a delivery state, in which the valve assembly seals the fluid port and unblocks the supply of fluid from the delivery line, and a cleanout state, in which the valve assembly unseals the fluid port and blocks the supply of fluid toward the distributor outlet.

According to another unclaimed aspect of the present disclosure, a self-cleaning hose system for an extraction cleaner has a fluid delivery system and a fluid recovery system. The self-cleaning hose system includes a wand having a wand body which contains a fluid delivery pathway and a fluid recover pathway fluidly connected via a fluid port. The fluid delivery pathway is configured to receive a cleaning liquid, and the fluid recovery pathway is configured to transfer debris received via the wand. A valve assembly is actuable from an inactive state, in which the valve assembly seals the fluid port and blocks a fluid connection between the fluid delivery pathway and the fluid delivery system, to a first active state, in which the valve assembly seals the fluid port and fluidly connects the fluid delivery pathway to the fluid delivery system, and to a second active state, in which the valve assembly unseals the fluid port and blocks the fluid connection between the fluid delivery pathway and the fluid delivery system. An actuator lever is movable between a deactivated position, in which the actuator lever is disengaged from the valve assembly, and an activated position, in which the actuator lever pushes the valve assembly to the second active state.

According to yet another aspect of the present invention, an extraction cleaner includes a cleaner body, a fluid recovery system which includes a suction source configured to create a fluid pressure vacuum, a fluid delivery system including a liquid source configured to contain and dispense therefrom a cleaning liquid. A hose is fluidly connected to both the fluid recovery system and the fluid delivery system. A wand assembly is fluidly connected to the hose and includes a wand body containing a fluid delivery pathway, a fluid recovery pathway, and a fluid port fluidly connecting the fluid delivery and recovery pathways. The fluid delivery pathway is fluidly connected via a delivery line to the fluid delivery system to receive therefrom a supply of cleaning liquid. The fluid recovery pathway is fluidly connected via a working airflow pathway to the fluid recover system to transfer thereto debris received via the wand body. A valve assembly is actuatable from an inactive state, in which the valve assembly seals the fluid port and blocks the supply of cleaning liquid from the delivery line, to a delivery state, in which the valve assembly seals the fluid port and unblocks the supply of cleaning liquid from the delivery line, and a cleanout state, in which the valve assembly unseals the fluid port and blocks the supply of cleaning liquid toward the fluid delivery system. An actuator lever is movable between a deactivated position, in which the actuator lever is disengaged from the valve assembly, and an activated position, in which the actuator lever is engaged with the valve assembly, thereby transitioning the valve assembly from the inactive state to the cleanout state.

Aspects of this invention are directed to self-cleaning features for vacuum-based cleaning systems. Aspects of this disclosure are also directed to manufacturing systems, methods, and control logic for making/using any of the disclosed cleaner systems, devices, features, etc. As used herein, the terms "extraction cleaner" and "deep cleaner" - including variations and permutations thereof - may be used interchangeably and synonymously to include any relevant vacuum-based cleaner system, including upright, canister, handheld, and pod architectures of the wet extraction type in both corded and cordless configurations, as some non-limiting examples. In an example, there is presented a wand assembly for an extraction cleaner, which has both a fluid delivery system for dispensing cleaning fluid and a fluid recovery system for extricating debris. Disclosed wand assemblies may be integrally formed as a one-piece structure permanently coupled to, or selectively detachable from an accessory tool and/or a cleaner hose.

In one implementation, the wand assembly includes a wand body that contains a fluid delivery pathway, a fluid recovery pathway, and a fluid port that selectively connects the fluid delivery and recovery pathways. The wand's fluid delivery pathway fluidly connects via a first fluid coupling to the extraction cleaner's fluid delivery system to receive therefrom a cleaning liquid. Likewise, the wand's fluid recovery pathway fluidly connects via a second fluid coupling to the extraction cleaner's fluid recovery system to transfer thereto debris received via the wand, e.g., from an accessory tool. A valve assembly is carried by or otherwise attached to the wand body to regulate the flow of cleaning fluid therethrough. The valve assembly is actuable between: (1) an inactive state, in which the valve assembly seals the fluid port and blocks the first fluid coupling; (2) a delivery state, in which the valve assembly seals the fluid port and unblocks the first fluid coupling; and (3) a cleanout state, in which the valve assembly unseals the fluid port and blocks the first fluid coupling. The wand assembly also includes an actuator lever that is carried by or otherwise attached to the wand body to selectively actuate the valve assembly. The actuator lever is rotatable between a deactivated position, in which the actuator lever is disengaged from the valve assembly, and an activated position, in which the actuator lever engages and transitions the valve assembly to the cleanout state. In this context, an "integral" cleanout system may be defined to mean that the functional cleanout features are carried by the wand assembly.

In another example, there is presented a self-cleaning hose system for a wand of an extraction cleaner. The extraction cleaner is equipped with a fluid delivery system for dispensing cleaning fluid, and a fluid recovery system for collecting dirt, dust, liquids, and other debris. The wand has a wand body that contains fluid delivery and recovery pathways that are fluidly connected to each other via a fluid port. The fluid delivery pathway is fluidly connectable to the fluid delivery system, e.g., via a flexible fluid delivery conduit, to receive therefrom a cleaning liquid. Likewise, the fluid recovery pathway is fluidly connectable, e.g., via a flexible cleaner hose, to the fluid recovery system to transfer thereto debris received via the wand.

In some aspects, the cleanout system includes a valve assembly that is operatively connected to the wand and is operable in at least three operating states: (a) an inactive state, in which the valve assembly seals the fluid port and blocks the fluid connection between the fluid delivery pathway and the fluid delivery system; (b) a first active state, in which the valve assembly seals the fluid port and fluidly connects the fluid delivery pathway to the fluid delivery system; and (c) a second active state, in which the valve assembly unseals the fluid port and blocks the fluid connection between the fluid delivery pathway and the fluid delivery system. An actuator lever is operatively connected to the wand and is rotatable back-and-forth between a deactivated position and an activated position. When in the deactivated position, the actuator lever is disengaged from the valve assembly, e.g., such that the valve assembly is actuable in the first active state. When in the activated position, the actuator lever engages and pushes the valve assembly to the second active state, i.e., to initiate a cleanout process.

In another example, an extraction cleaner system includes a cleaner body, a fluid recovery system housed in the cleaner body and including a suction source that creates a fluid pressure vacuum, and a fluid delivery system housed in the cleaner body and including a liquid source that contains and dispenses therefrom a cleaning liquid. A hose is fluidly connected to both the fluid recovery system and the fluid delivery system. A wand assembly, which is fluidly connected to the hose, includes a wand body that contains a fluid delivery pathway, a fluid recovery pathway, and a fluid port that fluidly connects the fluid delivery and recovery pathways. The fluid delivery pathway fluidly connects via a first fluid coupling to the fluid delivery system to receive therefrom a cleaning liquid. The fluid recovery pathway fluidly connects via a second fluid coupling to the fluid recovery system to transfer thereto debris received via the wand body. A valve assembly is mounted to the wand and is actuable from an inactive state, in which the valve assembly seals the fluid port and blocks the first fluid coupling, to a delivery state, in which the valve assembly seals the fluid port and unblocks the first fluid coupling, and a cleanout state, in which the valve assembly unseals the fluid port and blocks the first fluid coupling. An actuator lever is mounted to the wand and is rotatable between a deactivated position, in which the actuator lever is disengaged from the valve assembly, and an activated position, in which the actuator lever presses against and thereby transitions the valve assembly from the inactive state to the cleanout state.

For any of the disclosed systems, methods, and devices, the actuator lever may include a finger-actuated lever arm that is located outside of and pivotably mounted to the wand body, e.g., via transversely projecting pivot pins. In this instance, the actuator lever may also include a lever hammer that is located inside of the wand body and fixedly coupled to the lever arm to rotate in unison therewith. The lever arm may be fabricated with an arched (first) cuff that has a semicircular cross-section and a finger tab that projects at an oblique angle from the first cuff. Likewise, the lever hammer may be fabricated with an arched (second) cuff that is circumscribed by the first cuff and has a semicircular cross-section, e.g., that is smaller than the first cuff's semicircular cross-section. A hammer head projects axially from the second cuff, e.g., to selectively engage and transition the valve assembly to the cleanout state.

For any of the disclosed systems, methods, and devices, the wand assembly may also include a lever-regulating (first) biasing member that is operatively attached to the wand body and biases the actuator lever to the deactivated position. This biasing member may take on innumerable forms, including a torsion or leaf spring that is interposed between and presses against the actuator lever and wand body. As another option, a detent nub may project from the actuator lever (or the wand body), and a detent pocket may be recessed into the wand body (or the actuator lever). When properly mated, the detent nub seats inside the detent pocket to thereby retain the actuator lever in the deactivated position, e.g., to help prevent inadvertent activation of the wand's cleanout feature.

For any of the disclosed systems, methods, and devices, the valve assembly may include a valve housing that mounts to the wand body and defines therein an elongated valve chamber, which fluidly connects to the fluid delivery pathway and the fluid recovery pathway. A valve body, which may be in the nature of a spring-biased, multi-landing spool valve body, is movably mounted to the valve housing and slidable back-and-forth between at least an inactive position and a valve body (first) active position. When the valve assembly is in the inactive state, the valve body is located in the inactive position and blocks the first fluid coupling, e.g., to prevent dispensing of cleaning liquid through the wand's fluid delivery pathway. When the valve assembly is in the delivery state, the valve body is located in the first active position and unblocks the first fluid coupling, e.g., to enable dispensing of cleaning liquid through the wand's fluid delivery pathway. In this instance, a valve body-regulating (second) biasing member, such as a helical compression spring, may be interposed between the valve housing and valve body to bias the valve body to the inactive position. The valve housing may take on a multi-ported design with a first valve port that fluidly connects to the first fluid coupling, a second valve port that fluidly connects to the wand's fluid delivery pathway, and a third valve port that fluidly connects to the wand's fluid recovery pathway via the fluid port.

For any of the disclosed systems, methods, and devices, the valve assembly may include a valve plug that is movably mounted to the valve housing and slidable back-and-for the between a sealing position and a valve plug (second) active position. When the valve assembly is in the inactive state, the valve plug is located in the sealing position and seals the fluid port, e.g., to deactivate the cleanout feature. When the valve assembly is in the cleanout state, the valve plug is located in the second active position and unseals the fluid port, e.g., to thereby directly fluidly connect the wand's fluid delivery and recovery pathways and activate the cleanout feature. The valve assembly may include a plug-regulating (third) biasing member interposed between the valve plug and the valve body; this biasing member biases the valve plug to the sealing position to help ensure the valve plug seals the fluid port.

For any of the disclosed systems, methods, and devices, a first end of the wand body includes a first opening and a first mechanical coupler that mates with a tool accessory. A second end of the wand body may include a second opening and a second mechanical coupler that mates with a cleaner hose of the extraction cleaner. Alternatively, the wand body may be fixedly attached to or integrally formed with a tool accessory. In this instance, an opposing end of the wand body may include a coupler that mates with the cleaner hose to thereby mount the wand body to the hose. As yet another option, the wand body may be fixedly attached to or integrally formed with the cleaner hose. In this instance, an opposing end of the wand body may include a coupler that mates with one or more tool accessories to thereby mount each accessory tool to the wand body.

The above Summary does not represent every embodiment or every aspect of the present invention. Rather, the Summary merely provides exemplification of some of the novel concepts and features set forth herein. The above features and advantages, and other features and attendant advantages, will be apparent from the following Detailed Description of illustrated examples and representative modes for carrying out the present invention when taken in connection with the accompanying drawings and appended claims.

### BRIEF DESCRIPTION OF THE DRAWINGS

FIG. 1 is a schematic diagram of a representative extraction cleaner system, according to various aspects of the present invention;
FIG. 2 is an enlarged top perspective view of a representative accessory wand with an integral self-cleaning hose ("cleanout") system, according to various aspects of the present invention;
FIG. 3 is a side elevational cross-sectional view of the representative accessory wand of FIG. 2 taken in cross-section along line 3-3 with the main view showing a cleanout actuator lever and a fluid delivery trigger in deactivated positions;
FIG. 3A is a side elevational cross-sectional view showing the fluid delivery trigger activated to actuate a fluid delivery system;
FIG. 4 is a side elevational cross-sectional view of the representative accessory wand of FIG. 2 now showing the manually operated cleanout actuator lever in an activated position and the integral cleanout system in an activated cleanout state, according to various aspects of the present invention;
FIG. 5 is a partially exploded top perspective view of another representative accessory wand with an integral cleanout system with actuator lever biasing ribs and a detent lock feature, according to various aspects of the present invention;
FIG. 5A is a side perspective view of the actuator lever biased towards a deactivated position;
FIG. 5B is a side perspective view a lever arm; and
FIG. 6 is a side perspective view of a representative accessory wand and integral cleanout system of FIG. 2 with an optional helical torsion spring biasing the manually operated actuator lever to the off position, according to various aspects of the present invention.

The present disclosure is amenable to various modifications and alternative forms, and some representative configurations are shown by way of example in the drawings and will be described in detail below. It should be understood, however, that the novel aspects of this invention are not limited to the particular forms illustrated in the above-enumerated Figures. Rather, this invention covers all modifications, equivalents, combinations, permutations, and alternatives falling within the scope of the appended claims.

### DETAILED DESCRIPTION

Representative examples of the invention are shown in the appended drawings and described in detail below, with the understanding that the descriptions are exemplifications of disclosed principles and not limitations of the broad aspects of the invention. To that end, elements and limitations described herein, but not explicitly set forth in the claims, should not be incorporated into the claims, singly or collectively, by implication, inference, or otherwise. Moreover, the drawings discussed herein may not be to scale, and are provided purely for instructional purposes. Thus, the specific and relative dimensions shown in the Figures are not to be construed as limiting.

Additionally, unless specifically disclaimed: the singular includes the plural and vice versa; the words "and" and "or" shall be both conjunctive and disjunctive; the words "any" and "all" shall both mean "any and all"; and the words "including," "containing," "comprising," "having," along with permutations thereof and similar terms, shall each mean "including without limitation." Moreover, words of approximation, such as "about," "almost," "substantially," "generally," "approximately," and the like, may each be used herein in the sense of "at, near, or nearly at," or "within 0-5% of," or "within acceptable manufacturing tolerances," or any logical combination thereof, for example. Lastly, directional adjectives and adverbs, such as front, back, left, right, fore, aft, vertical, horizontal, forward, backward, upward, downward, etc., may be with respect to an extraction cleaner device that is operatively oriented for cleaning a horizontal surface.

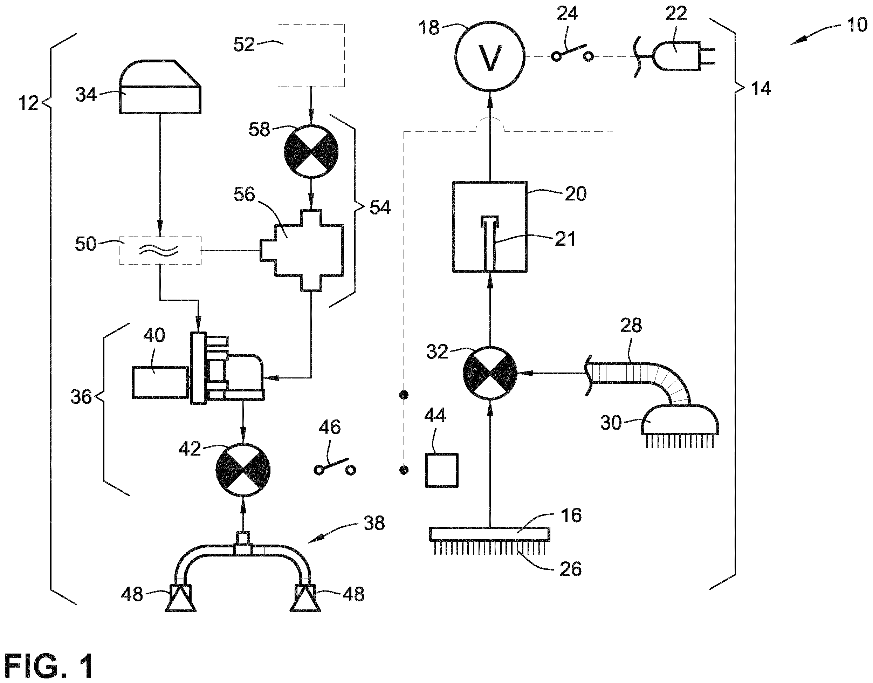

Referring now to the drawings, wherein like reference numbers refer to like features throughout the several views, there is shown in FIG. 1 a schematic diagram of a representative extraction cleaning system, which is designated generally at 10 and portrayed herein for purposes of discussion as a wet-type extraction cleaner. The illustrated cleaning system 10 - also referred to herein as "extraction cleaner" or "deep cleaner" - is merely an exemplary application with which aspects of the invention may be practiced. As such, it will be understood that aspects and features of the invention may be used for other wet-type extraction cleaner configurations and employed for any logically relevant type of deep cleaning system. Moreover, only select components of the extraction cleaner systems and cleanout assemblies are shown and described in additional detail below. Nevertheless, the systems assemblies discussed herein may include numerous additional and alternative features, and other available peripheral components, for carrying out the various methods and functions of this invention.

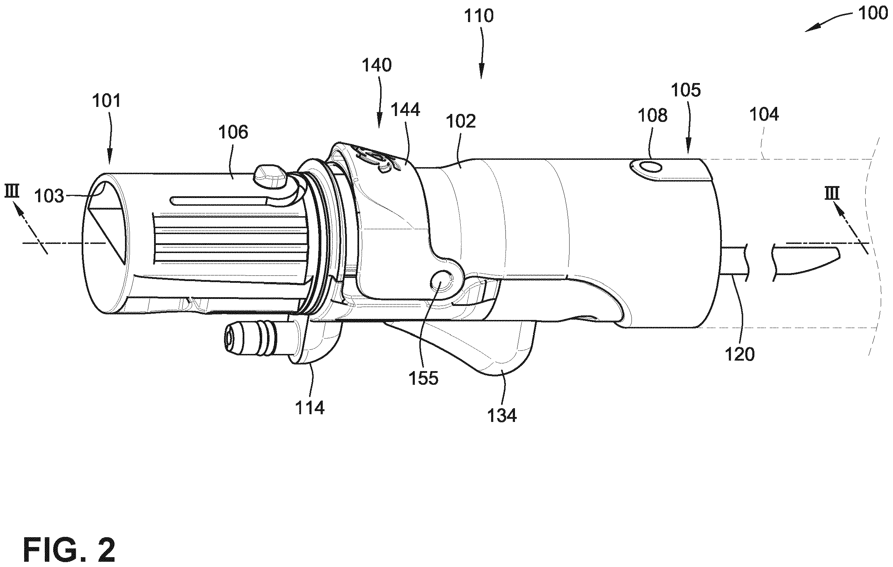

FIG. 1 illustrates various functional subsystems of a surface cleaning tool in the form of an extraction cleaner 10 system. These functional subsystems may be arranged into any desired configuration, including upright-type extraction devices, canister-type extraction devices, pod-type extraction devices, handheld extraction devices, autonomous and robotic cleaning devices, and commercial cleaners. For instance, any of the herein-described accessory wands and cleanout systems, such as those described with respect to FIGS. 2-6, may be incorporated into or adapted to include any of the related features of the extraction cleaner 10 illustrated in and described with respect to FIG. 1, and vice versa. By way of example, an accessory wand may be adapted to detachably couple from, permanently affix to, or integrally form with one or more attachments, such as an accessory tool and/or a flexible vacuum cleaner hose, which can form a portion of the working air conduit between a suction nozzle and a suction source in a wheeled or carried base of an upright, cannister, handheld, or pod-type extraction device.

The extraction cleaner 10 of FIG. 1 may be a bipartite architecture with a fluid delivery system 12, which stores and selectively dispenses a cleaning fluid to a surface being cleaned, and a fluid recovery system 14, which removes spent cleaning fluid and debris from the surface being cleaned and stores the recovered cleaning fluid and debris. In this instance, the illustrated recovery system 14 may be composed of an upstream-end suction nozzle 16, a downstream-end vacuum-generating suction source 18, and an optional waste-storing recovery container 20. The suction source 18, which may be in the form of a motor-fan, positive-displacement, or centrifugal-rotodynamic assembly, is fluidly connected to the suction nozzle 16 and, when desired, generates a working air stream (e.g., configured to create a fluid pressure vacuum) for drawing liquid and debris into the recovery system 14. The recovery container 20, which is interposed between the suction nozzle 16 and suction source 18, separates and collects liquid and debris from the working airstream for later disposal. A separator 21 can be packaged inside a portion of the recovery container 20 for separating liquid and entrained debris from the working airstream.

Continuing with the discussion of the representative extraction cleaner 10 system of FIG. 1, the suction source 18 may be any suitable vacuum-generating, electromechanical device that is electrically coupled or couplable to a power source 22, such as a rechargeable battery or an electrical outlet. A power switch 24, which may be located between the suction source 18 and the power source 22, is selectively actuable by a user to activate the suction source 18. The suction nozzle 16 - through which is drawn dirt, debris, spent cleaning solution, etc. - may be integrated into a base, a tool, or a cleaning head and may be adapted to move over the surface being cleaned. An optional agitator 26 may be located adjacent to the suction nozzle 16 to disturb the surface being cleaned so that debris is broken up and more easily ingested into the suction nozzle 16. Some non-limiting examples of agitators include a horizontally oriented rotating brushroll, a vertically oriented rotating brushroll, a stationary brush, an array of flexible protuberances, etc.

The extraction cleaner 10 may operatively interface with any of an assortment of interchangeable attachments and tools to facilitate different cleaning tasks. In FIG. 1, for example, an accessory hose 28 may selectively fluidly couple the suction source 18 to an accessory tool or cleaning attachment 30, such as an extension wand, an upholstery tool, a dusting brush, etc., with a separate suction inlet. In some embodiments, a diverter valve assembly 32 or other diverting mechanism can be provided to selectively redirect fluid communication from the suction source 18 to either the suction nozzle 16 or the accessory hose 28. The accessory hose 28 may also employ a fluid distributor that fluidly connects the fluid delivery system 12 with the tool/attachment 30 to selectively discharge therefrom the cleaning fluid.

The extraction cleaner's fluid delivery system 12 may be composed of a liquid source (e.g., a refillable or interchangeable fluid container 34) at an upstream-end of the system 12, a liquid-dispensing fluid distributor 38 at a downstream-end of the system 12, and a liquid flow-regulating flow control system 36 interposed between the container 34 and distributor 38. The fluid container 34 stores or contains and selectively dispenses therefrom a supply of cleaning fluid. The cleaning fluid may include one or more of any suitable cleaning liquids, such as water, compositions, concentrated detergents, diluted detergents, etc., and mixtures thereof. The flow control system 36 governs the transfer of cleaning fluid from the container 34 to the distributor 38. In the illustrated configuration, the flow control system 36 employs a unidirectional liquid pump 40 to pressurize the system 12, and a flow control valve or valves 42 to control the delivery of cleaning fluid to the distributor 38.

Still referring to FIG. 1, an actuator 44, which may be in the form of a manually operated trigger or lever, can be provided to activate the flow control system 36 and dispense fluid to and through the distributor 38. For a normally closed valve assembly, the actuator 44 may be operatively coupled to the valve 42 such that pressing the actuator 44 will open the valve 42. The valve 42 may be an electrically actuated valve device such that an electrical switch 46 located between the valve 42 and power source 22 is selectively closed when the actuator 44 is pressed, thereby powering the valve 42 to move to an open position. While any of an assortment of different flow-controlling devices may be employed, it may be desirable that the valve 42 of FIG. 1 be an electromagnetic solenoid valve or a manual spool valve. The liquid pump 40 can also be electrically connected to and powered by the power source 22. In accordance with the illustrated architecture, the pump 40 may be a centrifugal pump or a solenoid pump. It is also envisioned that the pump 40 may be eliminated from the system 12 and, if desired, the flow control system 36 may be a gravity-fed system. For instance, one or more mechanically actuated or electrically actuated valves may be fluidly coupled with outlet ports of the container(s) 34, 52; when opened, the valve(s) may allow fluid to flow under the force of gravity to the distributor 38.

With continuing reference to FIG. 1, the fluid distributor 38 may include one or more distributor outlets 48 for ejecting cleaning fluid onto a surface being cleaned. The distributor outlet(s) 48 may be packaged within the extraction cleaner 10 system to deliver fluid directly onto the surface or indirectly by delivering fluid onto or through the agitator 26. The distributor outlet(s) 48 may take on any suitable structure, such as a nozzle or spray tip or a distributed arrangement of distributor outlets 48. As illustrated in FIG. 1, for example, the distributor outlet 48 includes multiple spray tips that dispense cleaning fluid to a surface. If desired, the cleaning tool 30 may optionally include an auxiliary distributor outlet (not shown) that is coupled with the fluid delivery system 12. While FIG. 1 may be considered a schematic illustration of an upright deep cleaner (UDC), select features from this Figure may be adapted for incorporation into other extraction cleaner configurations, including portable deep cleaners (PDC) of the handheld and pod style.

An optional fluid heater device 50 may be fluidly interposed between the fluid container 34 and the fluid distributor 38 to selectively heat the cleaning fluid prior to the liquid pump 40 delivering the cleaning fluid through the distributor outlets 48 to the surface. According to the example illustrated in FIG. 1, an in-line electronic heater 50 is located downstream from the fluid container 34 and upstream of the pump 40. In yet another example, the cleaning fluid can be heated using exhaust air from a motor-cooling exhaust pathway for the suction source 18.

Fluid delivery system 12 of FIG. 1 may employ a single or multiple vessels for storing and dispensing a cleaning fluid or the pre-mixed components of a cleaning fluid mixture. For example, a first fluid container 34 may store water and a second fluid container 52 may store a cleaning detergent or additive. By way of example, and not limitation, the two containers 34, 52 may be defined by a supply tank and a collapsible bladder. In one configuration, the fluid container 34 may be a bladder that is stored within the recovery container 20. Alternatively, a single fluid container may be fabricated with multiple internal chambers for storing a variety of different liquids. The cleaning fluid in either container 34, 52 can include, but is not limited to, water or a mixture including water and one or more treating agents. These treating agents may include, but are not limited to, detergents, odor eliminators, sanitizers, stain removers, odor removers, deodorizers, fragrances, or any combination thereof.

For fluid delivery system architectures employing multiple containers 34, 52, the flow control system 36 may be equipped with a mixing system 54 operable to control a composition of the cleaning fluid that is delivered to the surface through the distributor 38. The cleaning fluid composition may be determined by a controlled ratio of cleaning fluids mixed together by the mixing system. As shown in FIG. 1, the mixing system 54 is typified by a mixing manifold 56 that selectively receives fluid from one or both of the fluid containers 34, 52. A mixing valve 58 is fluidly coupled with an outlet port of the second container 52; when the mixing valve 58 is opened, the cleaning fluid component from the second container 52 will flow to the mixing manifold 56. The composition of the cleaning fluid that is delivered to the surface can be selected by controlling the valve flow characteristics - timing, frequency, and length - of the mixing valve 58.

In operation, the extraction cleaner 10 of FIG. 1 may be prepared for use by filling one or both fluid containers 34, 52 with a cleaning fluid or cleaning fluid components and then electrically connecting the extraction cleaner 10 to the power source 22. Metered amounts of cleaning fluid may be selectively delivered to a chosen surface being cleaned via the fluid delivery system 12 by user-activation of the actuator 44. If desired, the extraction cleaner 10 may be concurrently moved back and forth over the chosen surface. The agitator 26 can simultaneously agitate the cleaning fluid into the chosen surface. During operation of the fluid recovery system 14, the extraction cleaner 10 draws in fluid and debris-laden working air through the suction nozzle 16 or cleaning tool 30, depending on the position of the diverter assembly 32. The working air is pulled into the downstream recovery container 20 where the liquid and debris are substantially separated from the working air. The airstream then passes through the suction source 18 prior to being exhausted from the extraction cleaner 10. The recovery container 20 can be periodically emptied of collected fluid, dirt, and other debris. Additional details of extraction cleaners, including their constituent parts, architectures, and uses, are disclosed in U.S. Patent Nos. 7,784,148, 9,560,948, 10,188,252, 10,588,476, and 10,624,515.

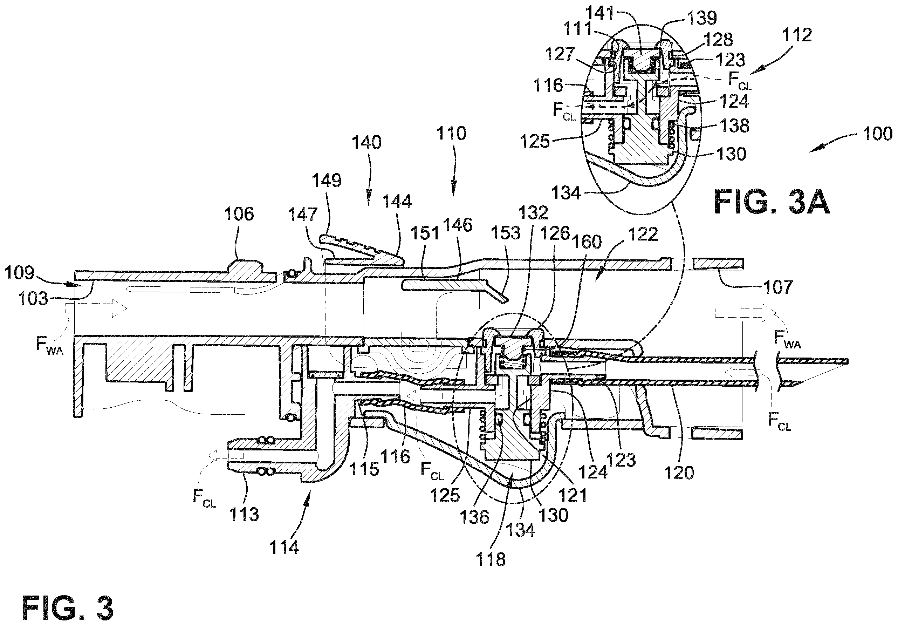

Turning next to FIGS. 2-4, there is shown a representative example of a system-integrated, self-cleaning feature for an extraction cleaning system. FIG. 2 illustrates an exemplary accessory wand 100 assembly with an integrated hose cleanout system 110, which may be utilized with a wet-type upright extraction cleaner, such as the extraction cleaner 10 of FIG. 1. As noted above, it is envisioned that the accessory wand 100 and cleanout system 110 of FIGS. 2-4 may incorporate any of the options and alternatives described herein with respect to the accessory wands and related features of FIGS. 1, 4 and 6, and vice versa. As a non-limiting point of similarly, all of the accessory wands 100, 200 and 300 of FIGS. 2-6 may be fabricated as handheld devices that are manufactured with a wand body 102. The wand body 102 is shown in FIGS. 2 and 3 as having a distal (first) wand end 101 with a distal (first) wand opening 103, and a proximal (second) wand end 105 with a proximal (second) wand opening 107. Defined within the accessory wand 100 is an internal working airflow pathway 109 (FIG. 3) that extends the length of the wand body 102 and fluidly interconnects the wand openings 103, 107 with each other and with an accessory hose (shown hidden at 104 in FIG. 2). In this context, an "integral" cleanout system may be defined to mean that the functional cleanout features are carried by the wand assembly.

Located at the distal end 101 of the wand body 102 is a proximal (first) coupler mechanism 106, which is represented in FIG. 2 as a snap-lock detent arm that mates with a complementary coupler mechanism of one or more interchangeable accessory tools to removably mount a tool, one at a time, to the accessory wand 100. Alternatively, the distal end 101 of the wand body 102 may be permanently affixed to or integrally formed with an accessory tool. Located at the proximal end 105 of the wand body 102 is a proximal (second) coupler mechanism 108, which is represented in FIG. 2 as a snap-lock detent cuff that mates with a complementary coupler mechanism of the accessory hose 104 to removably connect the wand 100 to the hose 104. Alternatively, the proximal end 105 of the wand body 102 may be permanently affixed to or integrally formed with an accessory hose or other fluid conduit. With this arrangement, a user of the accessory wand 100 assembly of FIG. 2 is able to selectively connect an accessory tool (e.g., accessory tool 30) to a cleaning system, such as the fluid delivery and extraction systems 12, 14 of FIG. 1, via the accessory hose 104 using the wand body 102 as an intervening fluid coupling piece, which may be utilized as a grip.

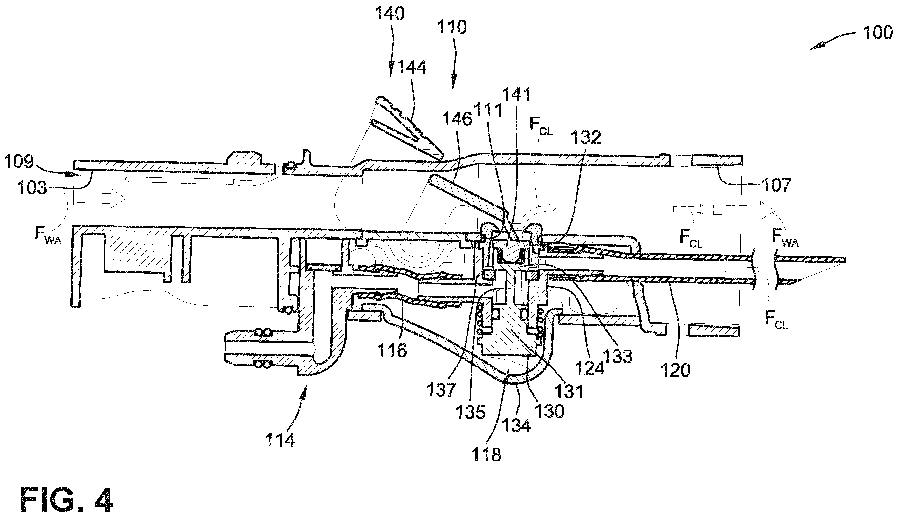

With reference to the cross-sectional views of FIGS. 3 and 4, the wand body 102 houses therein, carries, or defines (collectively "contains") a fluid delivery pathway 112 for receiving a liquid cleaning fluid (fluid flow arrows *F_{CL}*) from an extraction cleaner's fluid delivery system, and transmitting the cleaning liquid *F_{CL}* through the accessory wand 100 to the mated, or otherwise coupled, accessory tool 30 (FIG. 1). In FIG. 3, the fluid delivery pathway 112 may be represented, at least in part, by an S-shaped barb fitting 114 with an integral barbed outlet tip 113 that fluidly connects to a mating adapter of a spray nozzle (e.g., distributor outlet(s) 48) of the accessory tool 30. Projecting from an opposing side of the barb fitting 114 is an integral barbed inlet tip 115 that press-fits into and fluidly connects via flexible transfer line 116 to a manually operated valve assembly 118. The valve assembly 118, in turn, connects via a flexible delivery line 120 inside the accessory hose 104 to the extraction cleaner's fluid delivery system (e.g., fluid delivery system 12 of FIG. 1).

The wand body 102 also contains a fluid recovery pathway 122 for receiving a working airflow (fluid flow arrows *F_{WA}*) with spent cleaning liquid, dirt, and other entrained debris from the accessory tool 30, and transferring the working airflow *F_{WA}* through the accessory wand 100 to the extraction cleaner's fluid recovery system (e.g., fluid recovery system 14 of FIG. 1). In FIG. 3, the fluid recovery pathway 122 may be represented, at least in part, by the working airflow pathway 109 that fluidly connects the distal wand opening 103 to the accessory hose 104 via the proximal wand opening 107. Defined through an exterior wall of the wand body 102 is a fluid port 111 FIG. 3A) that allows the fluid delivery pathway 112 to directly fluidly connect to the fluid recovery pathway 122 through manual activation of the valve assembly 118 to enable a "hose 104 cleanout" feature, as will be described in further detail below.

As illustrated in FIGS. 3 and 4, a three-port diverter T-valve assembly 118 is mounted to or otherwise carried by the wand body 102, which may be manually operated to selectively direct liquid cleaning solution *F_{CL}* through the fluid delivery pathway 112 and, when desired, to selectively divert cleaning solution *F_{CL}* to the fluid recovery pathway 122. By way of non-limiting example, the valve assembly 118 of FIGS. 2-4 may be actuable between at least three distinct operating states: (1) an inactive state (an example of which is illustrated in FIG. 3), in which the valve assembly 118 concurrently blocks/seals the fluid port 111 and blocks/seals the fluid connection between the barb fitting 114 and the flexible delivery line 120, thereby blocking a supply of fluid from the delivery line 120; (2) a delivery state (FIG. 3A), in which the valve assembly 118 blocks/seals the fluid port 111 and concurrently unblocks/unseals the fluid connection between the barb fitting 114 and the flexible delivery line 120, and, therefore, permits the supply of fluid from the delivery line 120 toward the barb fitting 114; and (3) a cleanout state (FIG. 4), in which the valve assembly 118 unblocks/unseals the fluid port 111 and blocks/seals the fluid connection between the barb fitting 114 and the flexible delivery line 120. For at least some applications, the accessory wand 100 may be characterized by a single valve assembly 118 that is operable to regulate the dispensation of cleaning solution through the fluid delivery pathway 112 and onto a select surface during a surface cleaning operation, and to redirect cleaning solution from the extraction cleaner's fluid delivery system directly into the working airflow pathway 109 during a hose cleanout operation.

Fluid flow control of the cleaning liquid *F_{CL}* through the accessory wand 100 assembly may be achieved by any suitable valve architecture, including mechanical, electromechanical, magnetomechanical, pneumatic, and hydraulic designs. In accordance with the illustrated architecture, the valve assembly 118 of FIG. 3 is a manually activated mechanical design that includes a multi-ported valve housing 124 with an internal valve chamber 121 that fluidly connects to both the fluid delivery pathway 112 and the fluid recovery pathway 122. Valve housing 124 is shown formed with at least three valve ports for fluidly connecting the valve assembly 118 to the working airflow pathway 109, barb fitting 114, and cleaning liquid delivery line 120. Integrally formed with and projecting from a proximal side of the valve housing 124 is a barbed valve inlet tip 123 (representative of a "first valve port") that press-fits into and fluidly connects with the flexible delivery line 120 and, thus, the extraction cleaner's fluid delivery system. A barbed valve outlet tip 125 (representative of a "second valve port") is integrally formed with and projects from a distal side of the valve housing 124, opposite that of the valve inlet tip 123. The valve outlet tip 123 press-fits into and fluidly connects to the flexible transfer line 116 and, thus, the barb fitting 114. Extending through the top of the valve housing 124 is a cleanout gate 127 (representative of a "third valve port") that fluidly connects via a toroidal cap 126 to the fluid port 111 and, thus, the fluid recovery pathway 122. A first polymeric O-ring 128 (FIG. 3A) nests within an annular seal seat in the toroidal cap 126 and fluidly seals the valve housing 124 and cap 126 to the wand body 102 and port 111.

Fluid movement through the valve assembly 118 may be achieved by any suitable flow control hardware, including poppet, ball, needle, diaphragm, and plug designs. In accordance with the illustrated architecture, the valve assembly 118 of FIG. 3 is a combination lift and spool valve that utilizes a spring-biased, multi-landing spool valve body 130 and a spring-biased, hat-shaped valve plug 132 that are both movably mounted to the valve housing 124. The spool valve body 130 may be a one-piece construction with an elongated plinth-like structure having a pair of longitudinally spaced landings 131 and 133 that are disposed inside the internal valve chamber 121 and connected by a reduced-diameter stem 135 (FIG. 4). A second polymeric O-ring 136 (FIG. 3) nests within an annular seal seat of the first landing 131 and fluidly seals the spool valve body 130 to the valve housing 124.

Valve assembly 118 illustrated in FIGS. 3 and 4 may be a normally-closed valve design that blocks fluid flow through the assembly 118 until activated by a user. When the valve assembly 118 is deactivated and, thus, in a liquid blocking inactive state (FIG. 3), the second landing 133 of the spool valve body 130 sealingly presses against a valve seat 137 within the valve housing 124. In so doing, the valve body 130 blocks fluid flow from the fluid delivery system via flexible delivery line 120, through the valve assembly 118, and to the barb fitting 114 via flexible transfer line 116. When a user of the accessory wand 100 manually depresses a finger-activated spray trigger 134, the user concomitantly pushes the spool valve body 130 (e.g., vertically upwards in FIG. 3) from an inactive, closed position to a fluid dispensing (first) active position (FIG. 3A). This places the valve assembly 118 in a cleaning liquid delivery state. By sliding the spool valve body 130 to its active position, the second landing 133 displaces away from the valve seat 137 (e.g., vertically upwards in FIG. 4) and unblocks the fluid coupling between the fluid delivery system and the fluid delivery pathway 112. In effect, unseating the landing 133 from the valve seat 137 causes the valve assembly 118 to fluidly connect the delivery line 120 to the transfer line 116. A spool biasing member, such as helical compression spring 138, is interposed between an exterior flange of the valve housing 124 and the first landing 131 of the spool valve body 130; the spring 138 biases the valve body 130 (e.g., vertically downwards in FIG. 3) to the inactive position.

When the valve assembly 118 is deactivated and, thus, in a liquid blocking inactive state (an example of which is illustrated in FIG. 3), a disc-shaped contact head 141 of the valve plug 132 engages, or sealingly presses against, a plug seat 139 (FIG. 3A) of the toroidal cap 126. By placing the valve plug 132 in this sealing position, the contact head 141 seals the fluid port 111 and thereby blocks direct fluid flow from the fluid delivery system via flexible delivery line 120, through the valve assembly 118, and to the fluid recovery system via recovery pathway 122. When a user of the accessory wand 100 manually moves (e.g., rotates) or actuates a cleanout actuator lever 140, the user thereby presses the valve plug 132 (e.g., vertically downwards in FIG. 3) from the sealing position to a cleanout actuating (second) active position (an example of which is illustrated in FIG. 4). This places the valve assembly 118 in a hose and wand-cleaning cleanout state. By sliding the valve plug 132 to its active position, the contact head 141 displaces away from the plug seat 139 (e.g., vertically downwards in FIG. 3) and unblocks the fluid port 111. In effect, unseating the contact head 141 from the plug seat 139 causes the valve assembly 118 to directly fluidly connect the delivery line 120 to the working airflow pathway 109. A plug biasing member, such as helical compression spring 160, is interposed between the second landing 133 of the spool valve body 130 and a bottom face of the contact head 141 of the valve plug 132; this spring 138 biases the valve plug 132 to the sealing position.

In the description above, a user-activated spray trigger 134, which may be located on a bottom side of the wand body 102, can be depressed to activate the accessory wand's cleaning liquid delivery state, whereas the user-activated actuator lever 140 located on a top side of the wand body 102 may be moved, e.g., rotated, to activate the accessory wand's self-cleaning cleanout state. An attendant benefit of having two discrete actuators that are activated in two physically distinct manners is that spray trigger 134 may be finger-actuated by a squeezing or pressing force, whereas the clean-out actuator lever 140 may be actuated by a different rotating or pulling force. Compared to systems in which both the solution spray and clean-out features are actuated by squeezing/pressing a button or a trigger (e.g., the actuators are activated in a same physical manner), the use of two distinct actuating devices using two different activating forces may decrease user confusion and minimize accidental actuation of the one feature when the other feature is desired. Furthermore, by locating each actuator at a distinct location (e.g., the actuator lever 140 is located on a top side of the wand body 102 and the spray trigger 134 is located on a bottom side of the body 102) may allow for one handed use whereby a user's fingers can be used to actuate the spray trigger 134 and a user's thumb can be used to actuate the clean-out feature (e.g., via lever 140).

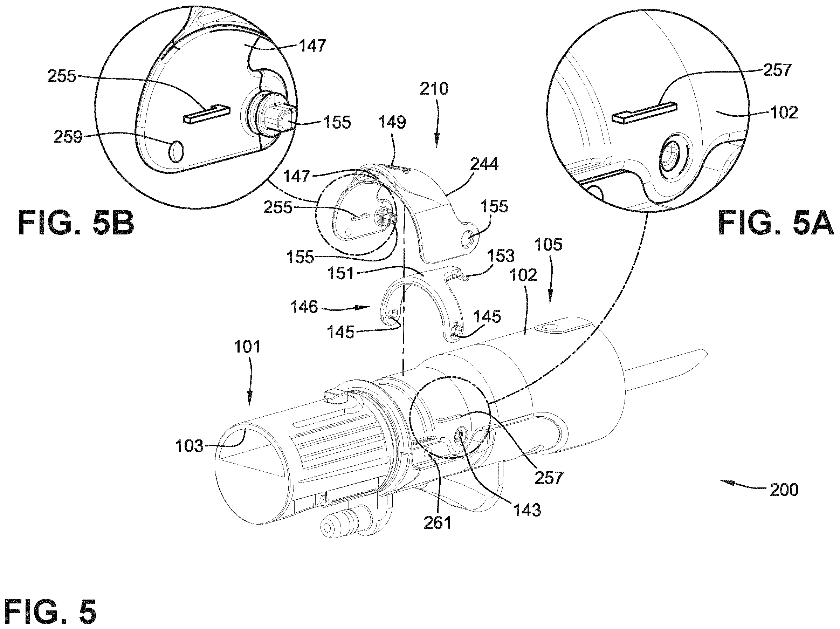

As illustrated in FIGS. 3 and 4, the cleanout actuator lever 140 is movably mounted to the wand body 102, e.g., via a pair of pivot pins 155 that project radially inward from the actuator lever 140 and extend through complementary through holes 143 (FIG. 5) in the wand body 102. Once properly mounted, the cleanout actuator lever 140 may be manually rotatable (e.g., in a clockwise direction in FIG. 2) from a deactivated position (FIG. 3) to an activated position (FIG. 4). When in the deactivated position, the actuator lever 140 can be disengaged from the valve assembly 118 thus allowing the valve plug 132 to be pushed to the sealing position via the plug-biasing compression spring 160. By rotating the actuator lever 140 to the activated position, the valve plug 132 is pushed to its active position and thereby transitions the valve assembly 118 to the cleanout state as previously described.

The cleanout actuator lever 140 may be a bipartite construction that includes a user-actuated lever arm 144, which may be located outside of the wand body 102 and pivotably mounted to the wand body's exterior surface, and a plug-pressing lever hammer 146, which is located inside of the wand body 102 and rotatable within the working airflow pathway 109. The radially projecting pivot pins 155 of the lever arm 144 are received in complementary pin slots 145 in the lever hammer 146 to thereby fixedly couple the lever hammer 146 to the lever arm 144 to rotate in unison with each other. It may be desirable that the exterior mounted lever arm 144 portion of the actuator lever 140 sits generally flush against an exterior surface of the wand body 102 when the actuator lever 140 is deactivated, e.g., so as to not haphazardly snag on random objects. At the same time, the interior mounted lever hammer 146 may sit generally flush against an interior surface of the wand body 102 when the actuator lever 140 is deactivated, e.g., so as to not impeded movement of the working airflow *F_{WA}* through the working airflow pathway 109.

As seen in the partially exploded view of FIG. 5, another exemplary accessory wand 200 assembly according to aspects of the present invention is illustrated. The accessory wand 200 assembly is similar to the accessory wand 100 assembly. Accordingly, parts identified with like numerals represent like parts, unless specifically stated otherwise. In the accessory wand 200 assembly, a lever arm 244 - which is substantially structurally similar to the lever arm 144 of FIGS. 2-4 - may be fabricated as a one-piece structure with an arcuate (first) cuff 147 that has a semicircular cross-section. As illustrated, a finger tab 149 is integrally formed with the arcuate cuff 147 and projects at an oblique angle (e.g., approximately 15 to 20 degrees) from a central region of the cuff 147. Likewise, the lever hammer 146 may be fabricated as a one-piece structure with an arcuate (second) cuff 151 that is nested within and circumscribed by the arcuate cuff 147 of the lever arm 144, 144/244. In some aspects, the lever hammer's cuff 151 has a respective semicircular cross-section that is smaller than the lever arm's semicircular cross-section. A hammer head 153 may be integrally formed with the arcuate cuff 151 and can project axially from a central region of cuff 151.

The accessory wand 200 assembly may incorporate one or more biasing members that individually or collectively bias a cleanout actuator lever to the deactivated position, e.g., to help ensure a self-cleaning cleanout operation is not accidentally triggered. In FIG. 5B, for example, a pair of elastic leaf springs 255 project radially inward and axially rearward from an interior surface of the lever arm's cuff 147 portion. These leaf springs 255 may be integrally formed with the lever arm 144/244, interposed between the actuator lever 140 and the wand body 102. Each leaf spring 255 presses against a respective fixed rib 257 (FIG. 5A) that projects radially outward from an exterior surface of the wand body 102; doing so biases the actuator lever 140 towards the deactivated position. Alternative configurations may attach or integrally form the leaf spring(s) 255 with the wand body 102, and attach or integrally form the fixed rib(s) 257 with the actuator lever 140.

As illustrated in FIG. 5, a pair of hemispherical detent nubs 259 may project inwards from opposing sides of the actuator lever's cuff 147 (or radially outward from opposing sides of the wand body 102). Mating with the detent nubs 259 is a pair of complementary detent pockets 261, which are recessed into opposing sides of the wand body 102 (or into opposing sides of the actuator lever's cuff 147). Each detent pocket 261 aligns with and seats therein a respective detent nub 259 when the lever arm 144 is pressed up against the wand body 102. Mating the detent nubs 259 with the detent pocket 261 helps to retain the actuator lever 140 in the deactivated position.

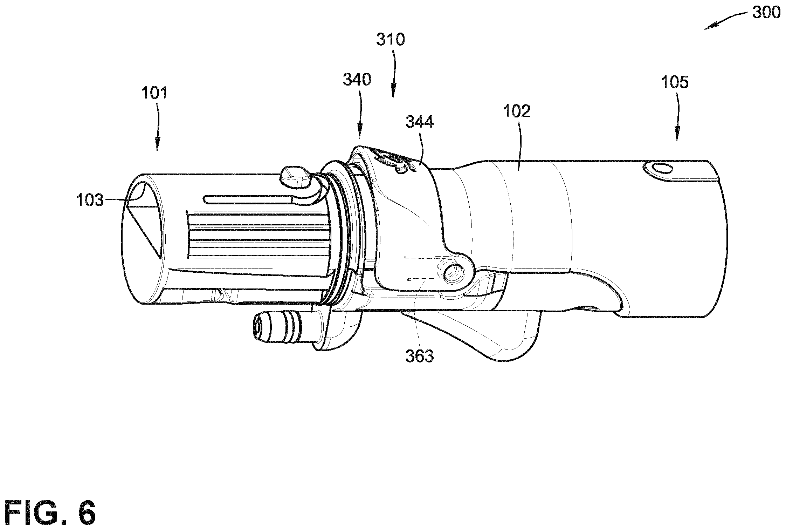

FIG. 6 illustrates another exemplary accessory wand 300 assembly according to aspects of the present invention. The accessory wand 300 assembly is similar to the accessory wand 100, 200 assemblies. Accordingly, parts identified with like numerals represent like parts, unless specifically stated otherwise. The main difference in the accessory wand 300 assembly is that a biasing member of a cleanout system 310 includes one or more torsion springs 363 that is/are interposed between and press against the actuator lever arm 344 and the wand body 102 to bias the actuator lever 340 to the deactivated position.

While some representative modes have been described in detail above, various alternative designs may exist for practicing the present teachings defined in the appended claims. Those skilled in the art will recognize that modifications may be made to the disclosed embodiments without departing from the scope of the claims. Moreover, the present concepts expressly include combinations and sub-combinations of the described elements and features. The detailed description and the drawings are supportive and descriptive of the present teachings, with the scope of the present teachings defined solely by the claims.

## Claims

1. A wand assembly for an extraction cleaner (10) having a fluid delivery system (12) and a fluid recovery system (14), the wand assembly comprising:
a wand body (102), the wand body (102) including:
a fluid delivery pathway (112) configured to receive a cleaning liquid via a delivery line (120) and dispense the cleaning liquid through a distributor outlet (48);
a fluid recovery pathway (122) configured to evacuate debris received via a working airflow pathway (109);
a fluid port (111) fluidly connecting the fluid delivery and recovery pathways (112,122); and **characterized by**:
a valve assembly (118) actuable between an inactive state, in which the valve assembly (118) seals the fluid port (111) and blocks a supply of fluid from the delivery line (120), to a delivery state, in which the valve assembly (118) seals the fluid port (111) and unblocks the supply of fluid from the delivery line (120), and a cleanout state, in which the valve assembly (118) unseals the fluid port (111) and blocks the supply of fluid toward the distributor outlet (48).

2. The wand assembly of claim 1, further comprising:
an actuator lever (140) moveable between a deactivated position, in which the actuator lever (140) is disengaged from the valve assembly (118), and an activated position, in which the actuator lever (140) transitions the valve assembly (118) to the cleanout state.

3. The wand assembly of claim 2, wherein the actuator lever (140) includes a finger-actuated lever arm (144, 244) located outside of and pivotably mounted to the wand body (102).

4. The wand assembly of claim 3, wherein the actuator lever (140) further includes a lever hammer (146) located inside of the wand body (102) and fixedly coupled to the lever arm (144) to rotate in unison therewith, and the lever arm (144, 244, 344) includes a first cuff (147) having a first semicircular cross-section and a finger tab (149) projecting at an oblique angle from the first cuff (147).

5. The wand assembly of claim 4, wherein the lever hammer (146) includes a second cuff (151) circumscribed by the first cuff (147) and having a second semicircular cross-section and a hammer head (153) projecting axially from the second cuff (151).

6. The wand assembly of any one of claims 2-5, further comprising a lever-regulating biasing member biasing the actuator lever (140) to the deactivated position.

7. The wand assembly of claim 6, wherein the lever-regulating biasing member includes a torsion spring (363) or a leaf spring (255) interposed between and pressing against the actuator lever (140) and the wand body (102).

8. The wand assembly of any one of claims 2-5, further comprising a detent nub (259) projecting from one of the actuator lever (140) and the wand body (102), and a detent pocket (261) recessed into the other of the actuator lever (140) and the wand body (102), the detent pocket (261) seating therein the detent nub (259) and thereby retaining the actuator lever (140) in the deactivated position.

9. The wand assembly of any one of claims 1-5, wherein the valve assembly (118) includes:
a valve housing (124) defining therein a valve chamber (121) fluidly connected to the fluid delivery pathway (112) and the fluid recovery pathway (122); and
a valve body (130) movably mounted to the valve housing (124) and slidable from an inactive position, where the valve body (130) blocks the supply of fluid from the delivery line (120), to a fluid dispensing position, where the valve body (130) unblocks the supply of fluid from the delivery line (120).

10. The wand assembly of claim 9, wherein the valve assembly (118) further includes a valve body-regulating biasing member interposed between the valve housing (124) and the valve body (130) and biasing the valve body (130) to the inactive position.

11. The wand assembly of claim 9, wherein the valve assembly (118) further includes a valve plug (132) movably mounted to the valve housing (124) and slidable from a sealing position, where the valve plug (132) seals the fluid port (111) when the valve assembly (118) is in the inactive state, to a cleanout actuating second active position, where the valve plug (132) unseals the fluid port (111) when the valve assembly (118) is in the cleanout state.

12. The wand assembly of claim 11, wherein the valve assembly (118) further includes a plug-regulating biasing member interposed between the valve plug (132) and the valve body (130) and biasing the valve plug (132) to the sealing position whereat the valve plug (132) seals the fluid port (111).

13. The wand assembly of claim 9, wherein the valve housing (124) includes:
a first valve port (123) fluidly connected to the delivery line (120);
a second valve port (125) fluidly connected to the fluid delivery pathway (112); and
a third valve port (127) fluidly connected to the fluid recovery pathway (122) via the fluid port (111).

14. The wand assembly of any one of claims 1-5, wherein a first end of the wand body (102) includes a first opening and a first coupler configured to mate with an accessory tool (30), and a second end of the wand body (102) includes a second opening and a second coupler configured to mate with an accessory hose (104).

15. An extraction cleaner (10) comprising the wand assembly of any one of claims 1-5.

## Patentansprüche

1. Rohranordnung für einen Extraktionsreiniger (10) mit einem Flüssigkeitszufuhrsystem (12) und einem Flüssigkeitsrückgewinnungssystem (14), wobei die Rohranordnung aufweist:
einen Rohrkörper (102), wobei der Rohrkörper (102) aufweist:
einen Flüssigkeitszufuhrweg (112), der dazu ausgestaltet ist, eine Reinigungsflüssigkeit aus einer Zufuhrleitung (120) aufzunehmen und die Reinigungsflüssigkeit durch einen Verteilerauslass (48) auszugeben,
einen Flüssigkeitsrückgewinnungsweg (122), der dazu ausgestaltet ist, über einen Arbeitsluftstromweg (109) aufgenommenen Schmutz abzutransportieren,
eine Flüssigkeitsanschlussverbindung (111), die die Flüssigkeitszufuhr- und Flüssigkeitsrückgewinnungswege (112, 122) durchflussmäßig verbindet, und **gekennzeichnet durch**:
eine Ventilanordnung (118), die zwischen einem inaktiven Zustand, in dem die Ventilanordnung (118) die Flüssigkeitsanschlussverbindung (111) abdichtet und Zufuhr von Flüssigkeit aus der Zufuhrleitung (120) blockiert, und einem Zufuhrzustand, in dem die Ventilanordnung (118) die Flüssigkeitsanschlussverbindung (111) abdichtet und Zufuhr von Flüssigkeit aus der Zufuhrleitung (120) zulässt, und einem Reinigungszustand umschaltbar ist, in dem die Ventilanordnung (118) die Flüssigkeitsanschlussverbindung (111) freigibt und die Zufuhr von Flüssigkeit zum Verteilerauslass (48) blockiert.

2. Rohranordnung nach Anspruch 1, die weiterhin aufweist:
einen Betätigungshebel (140), der zwischen einer deaktivierten Stellung, in der der Betätigungshebel (140) von der Ventilanordnung (118) gelöst ist, und einer aktivierten Stellung beweglich ist, in der der Betätigungshebel (140) die Ventilanordnung (118) in den Reinigungszustand überführt.

3. Rohranordnung nach Anspruch 2, wobei der Betätigungshebel (140) einen fingerbetätigten Hebelarm (144, 244) umfasst, der außerhalb des Rohrkörpers (102) und schwenkbar am Rohrkörper angebracht ist.

4. Rohranordnung nach Anspruch 3, wobei der Betätigungshebel (140) weiterhin einen Hebelhammer (146) aufweist, der sich innerhalb des Rohrkörpers (102) befindet und fest an den Hebelarm (144) gekoppelt ist, um sich mit diesem im Gleichschritt zu drehen, und wobei der Hebelarm (144, 244, 344) eine erste Manschette (147) aufweist, die einen ersten halbkreisförmige Querschnitt hat und eine Fingerlasche (149) aufweist, die in einem schrägen Winkel von der ersten Manschette (147) vorsteht.

5. Rohranordnung nach Anspruch 4, wobei der Hebelhammer (146) eine zweite Manschette (151) aufweist, die von der ersten Manschette (147) umschrieben ist und die einen zweiten halbkreisförmigen Querschnitt und einen Hammerkopf (153) hat, der axial von der zweiten Manschette (151) vorsteht.

6. Rohranordnung nach einem der Ansprüche 2-5, die weiterhin ein hebelsteuerndes Vorspannelement aufweist, das den Betätigungshebel (140) in die deaktivierte Stellung vorspannt.

7. Rohranordnung nach Anspruch 6, wobei das hebelsteuernde Vorspannelement eine Torsionsfeder (363) oder eine Blattfeder (255) aufweist, die zwischen dem Betätigungshebel (140) und dem Rohrkörper (102) eingesetzt ist und in Andruck gegen diese ist.

8. Rohranordnung nach einem der Ansprüche 2-5, die weiterhin einen Rastvorsprung (259), der von einem von dem Betätigungshebel (140) und dem Rohrkörper (102) vorsteht, und eine Rastvertiefung (261) aufweist, die als Vertiefung in den anderen von dem Betätigungshebel (140) und dem Rohrkörper (102) ausgebildet ist, wobei die Rastvertiefung (261) als Sitz den Rastvorsprung (259) aufnimmt und dadurch den Betätigungshebel (140) in der deaktivierten Stellung hält.

9. Rohranordnung nach einem der Ansprüche 1-5, wobei der Ventilaufbau (118) aufweist:
ein Ventilgehäuse (124), das eine Ventilkammer (121) darin definiert, die durchflussmäßig mit dem Flüssigkeitszufuhrweg (112) und dem Flüssigkeitsrückgewinnungsweg (122) verbunden ist, und
einen Ventilkörper (130) der beweglich in dem Ventilgehäuse (124) angebracht ist und aus einer inaktiven Stellung, in der der Ventilkörper (103) die Zufuhr von Flüssigkeit aus der Zufuhrleitung (120) blockiert, in eine Flüssigkeit ausgebende Stellung verschiebbar ist, in der der Ventilkörper (130) die Zufuhr von Flüssigkeit aus der Zufuhrleitung (120) freigibt.

10. Rohranordnung nach Anspruch 9, wobei der Ventilaufbau (118) weiterhin ein Ventilkörper-steuerndes Vorspannelement aufweist, das zwischen dem Ventilgehäuse (124) und dem Ventilkörper (130) eingesetzt ist und das den Ventilkörper (130) in die inaktive Stellung vorspannt.

11. Rohranordnung nach Anspruch 9, wobei der Ventilaufbau (118) einen Ventilstopfen (132) umfasst, der beweglich am Ventilgehäuse (124) angebracht ist und aus einer dichtenden Stellung, in der der Ventilstopfen (132) die Flüssigkeitsanschlussverbindung (111) abdichtet, wenn der Ventilaufbau (118) im inaktiven Zustand ist, in eine Reinigung auslösende, zweite aktive Stellung verschiebbar ist, in der der Ventilstopfen (132) die Flüssigkeitsanschlussverbindung (111) freigibt, wenn der Ventilaufbau (118) im Reinigungszustand ist.

12. Rohranordnung nach Anspruch 11, wobei der Ventilaufbau (118) weiterhin ein Stopfensteuerndes Vorspannelement umfasst, das zwischen dem Ventilstopfen (132) und dem Ventilkörper (130) eingesetzt ist und den Ventilstopfen (132) in die dichtende Stellung vorspannt, in der der Ventilstopfen (132) die Flüssigkeitsanschlussverbindung (111) abdichtet.

13. Rohranordnung nach Anspruch 9, wobei das Ventilgehäuse (124) aufweist:
einen ersten Ventilanschluss (132), der durchflussmäßig mit der Zufuhrleitung (120) verbunden ist,
einen zweiten Ventilanschluss (125), der durchflussmäßig mit dem Flüssigkeitszufuhrweg (112) verbunden ist, und
einen dritten Ventilanschluss (127), der durchflussmäßig mit dem Flüssigkeitsrückgewinnungsweg (122) über die Flüssigkeitsanschlussverbindung (111) verbunden ist.

14. Rohranordnung nach einem der Ansprüche 1-5, wobei ein erstes Ende des Rohrkörpers (102) eine erste Öffnung und eine erste Kupplung aufweist, die dazu ausgestaltet ist, mit einem Zubehörwerkzeug (30) in Eingriff zu treten, und wobei ein zweites Ende des Rohrkörpers (102) eine zweite Öffnung und eine zweite Kupplung hat, die dazu ausgestaltet ist, mit einem Zubehörschlauch (104) in Eingriff zu treten.

15. Extraktionsreiniger (10) mit einer Rohranordnung nach einem der Ansprüche 1-5.

## Revendications

1. Ensemble de tube pour un nettoyeur à extraction (10) ayant un système de distribution de fluide (12) et un système de récupération de fluide (14), l'ensemble de tube comprenant :
un corps de tube (102), le corps de tube (102) comprenant :
une voie de distribution de fluide (112) configurée pour recevoir un liquide de nettoyage via une conduite de distribution (120) et distribuer le liquide de nettoyage via une sortie de distributeur (48);
une voie de récupération de fluide (122) configurée pour évacuer les débris reçus via une voie de circulation d'air de travail (109) ;
un orifice de fluide (111) reliant de manière fluidique les voies de distribution et de récupération de fluide (112, 122) ; et **caractérisé par**
un ensemble de soupape (118) actionnable entre un état inactif, dans lequel l'ensemble de soupape (118) scelle l'orifice de fluide (111) et bloque une alimentation en fluide depuis la conduite de distribution (120), et un état de distribution, dans lequel l'ensemble de soupape (118) scelle l'orifice de fluide (111) et débloque l'alimentation en fluide depuis la conduite de distribution (120), et un état de nettoyage, dans lequel l'ensemble de soupape (118) descelle l'orifice de fluide (111) et bloque l'alimentation en fluide vers la sortie du distributeur (48).

2. Ensemble de tube selon la revendication 1, comprenant en outre :
un levier d'actionnement (140) mobile entre une position désactivée, dans laquelle le levier d'actionnement (140) est désengagé de l'ensemble de soupape (118), et une position activée, dans laquelle le levier d'actionnement (140) fait passer l'ensemble de soupape (118) à l'état de nettoyage.

3. Ensemble de tube selon la revendication 2, dans lequel le levier d'actionnement (140) comprend un bras de levier actionné par le doigt (144, 244) situé à l'extérieur du corps de tube (102) et monté de manière pivotante sur celui-ci.

4. Ensemble de tube selon la revendication 3, dans lequel le levier d'actionnement (140) comprend en outre un marteau à levier (146) situé à l'intérieur du corps de tube (102) et couplé de manière fixe au bras de levier (144) pour tourner à l'unisson avec celui-ci, et le bras de levier (144, 244, 344) comprend un premier manchon (147) ayant une première section transversale semi-circulaire et une languette de doigt (149) faisant saillie à angle oblique à partir du premier manchon (147).

5. Ensemble de tube selon la revendication 4, dans lequel le marteau à levier (146) comprend un second manchon (151) circonscrit par le premier manchon (147) et ayant une seconde section transversale semi-circulaire et une tête de marteau (153) faisant saillie axialement à partir du second manchon (151).

6. Ensemble de tube selon l'une quelconque des revendications 2 à 5, comprenant en outre un élément de rappel de réglage de levier rappelant le levier d'actionnement (140) vers la position désactivée.

7. Ensemble de tube selon la revendication 6, dans lequel l'élément de rappel de réglage de levier comprend un ressort de torsion (363) ou un ressort à lames (255) interposé entre et appuyant contre le levier d'actionnement (140) et le corps de tube (102).

8. Ensemble de tube selon l'une quelconque des revendications 2 à 5, comprenant en outre un bouton de détente (259) faisant saillie à partir de l'un du levier d'actionnement (140) et du corps de tube (102), et une poche de détente (261) encastrée dans l'autre du levier d'actionnement (140) et du corps de tube (102), la poche de détente (261) logeant à l'intérieur le bouton de détente (259) et retenant ainsi le levier d'actionnement (140) dans la position désactivée.

9. Ensemble de tube selon l'une quelconque des revendications 1 à 5, dans lequel l'ensemble de soupape (118) comprend :
un boîtier de soupape (124) définissant à l'intérieur de celui-ci une chambre de soupape (121) reliée fluidiquement à la voie de distribution de fluide (112) et à la voie de récupération de fluide (122) ; et
un corps de soupape (130) monté de manière mobile sur le boîtier de soupape (124) et pouvant coulisser d'une position inactive, dans laquelle le corps de soupape (130) bloque l'alimentation en fluide de la conduite de distribution (120), à une position de distribution de fluide, dans laquelle le corps de soupape (130) débloque l'alimentation en fluide de la conduite de distribution (120).

10. Ensemble de tube selon la revendication 9, dans lequel l'ensemble de soupape (118) comprend en outre un élément de rappel de réglage de corps de soupape interposé entre le boîtier de soupape (124) et le corps de soupape (130) et rappelant le corps de soupape (130) vers la position inactive.

11. Ensemble de tube selon la revendication 9, dans lequel l'ensemble de soupape (118) comprend en outre un bouchon de soupape (132) monté de manière mobile sur le boîtier de soupape (124) et pouvant coulisser d'une position d'étanchéité, dans laquelle le bouchon de soupape (132) scelle l'orifice de fluide (111) lorsque l'ensemble de soupape (118) est dans l'état inactif, vers une seconde position active d'actionnement de nettoyage, dans laquelle le bouchon de soupape (132) descelle l'orifice de fluide (111) lorsque l'ensemble de soupape (118) est dans l'état de nettoyage.

12. Ensemble de tube selon la revendication 11, dans lequel l'ensemble de soupape (118) comprend en outre un élément de rappel de réglage de bouchon interposé entre le bouchon de soupape (132) et le corps de soupape (130) et rappelant le bouchon de soupape (132) vers la position d'étanchéité dans laquelle le bouchon de soupape (132) scelle l'orifice de fluide (111).

13. Ensemble de tube selon la revendication 9, dans lequel le boîtier de soupape (124) comprend :
un premier orifice de valve (123) relié fluidiquement à la conduite de distribution (120) ;
un deuxième orifice de valve (125) relié fluidiquement à la voie de distribution de fluide (112) ; et
un troisième orifice de valve (127) relié fluidiquement à la voie de récupération de fluide (122) via l'orifice de fluide (111).

14. Ensemble de tube selon l'une quelconque des revendications 1 à 5, dans lequel une première extrémité du corps de tube (102) comprend une première ouverture et un premier coupleur configuré pour s'accoupler avec un outil accessoire (30), et une seconde extrémité du corps de tube (102) comprend une seconde ouverture et un second coupleur configuré pour s'accoupler avec un tuyau d'accessoire (104).

15. Nettoyeur à extraction (10) comprenant l'ensemble de tube selon l'une quelconque des revendications 1 à 5.
